# EUROPÄISCHE PATENTSCHRIFT

(11) **EP 1 964 318 B1**
(45) Veröffentlichungstag und Bekanntmachung des Hinweises auf die Patenterteilung: **20.04.2011**
(21) Anmeldenummer: 06819424.0
(22) Anmeldetag: 13.11.2006
(51) Int. Cl.: H04W 84/00

(54) **VERFAHREN ZUM AUFBAU EINES DRAHTLOSEN KETTENARTIGEN AD-HOC FUNKNETZWERKS**
METHOD FOR SETTING UP A WIRELESS CHAIN-TYPE AD-HOC RADIO NETWORK
PROCEDE POUR L'ETABLISSEMENT D'UN RESEAU RADIO SANS FIL AD HOC DU TYPE A CHAINE

(30) Priorität: 13.12.2005 DE 102005059522
(43) Veröffentlichungstag der Anmeldung: 03.09.2008
(73) Patentinhaber: Continental Automotive GmbH, 30165 Hannover (DE)
(72) Erfinder: RADTCHENKO, Andrei, 14641 Pessin (DE)
(86) Internationale Anmeldenummer: PCT/EP2006/068385
(87) Internationale Veröffentlichungsnummer: WO 2007/068542

(56) Entgegenhaltungen:
- EP-A- 1 077 579
- US-A1- 2005 137 786
- US-A1- 2006 109 143

## Beschreibung

Die Erfindung betrifft ein Verfahren zum Aufbau eines drahtlosen kettenartigen ad-hoc Funknetzwerkes zwischen Kraftfahrzeugen.

Ad-hoc Funknetzwerke unter Einbeziehung mehrerer Kraftfahrzeuge sind auch unter der Bezeichnung "car to car communikation" bekannt. Innerhalb eines solchen Funknetzwerkes können die Kraftfahrzeuge Informationen untereinander austauschen. Dies können beispielsweise Informationen über Gefahrstellen, die Fahrbahnbedingungen oder auch die Annäherung eines Kraftfahrzeugs mit Vorrang oder dergleichen sein.

Jedes der teilnehmenden Kraftfahrzeuge weist eine sende-/Empfangseinheit mit einer geringen Sendeleistung auf. Die Sendeleistung ist beispielsweise so bemessen, dass lediglich eine Verbindung zu benachbarten Kraftfahrzeugen aufgenommen werden kann. Insgesamt wird hierbei jedoch eine Funkkette zwischen den einzelnen beteiligten Kraftfahrzeugen aufgebaut, so dass ein Kraftfahrzeug auch von einem weiter entfernten Kraftfahrzeug außerhalb seiner eigenen Funkreichweite Informationen übermittelt bekommen kann. Ein derartiges Kommunikationssystem ist in der EP 1 223 567 A1 offenbart.

Wird über ein derartiges ad-hoc Funknetzwerk von einem Kraftfahrzeug aus eine Anfrage an andere Kraftfahrzeuge ausgesandt, so besteht in der Regel ein Interesse lediglich an Antworten solcher Kraftfahrzeuge, die die Straße in derselben Fahrtrichtung befahren. Kraftfahrzeuge, die in entgegengesetzter Fahrtrichtung fahren, finden beispielsweise andere Verkehrsverhältnisse vor, insbesondere bei Straßen mit getrennten Fahrbahnen für beide Fahrtrichtungen. Weisen die Kraftfahrzeuge ein Navigationssystem auf, so kann anhand der durch das Navigationssystem ermittelten Daten auch auf die Fahrtrichtung geschlossen werden und diese Information zusammen mit der Anfrage übertragen werden. Andere Kraftfahrzeuge, die ebenfalls ein derartiges Navigationssystem aufweisen, bei dem die eigene Position beispielsweise mittels bekannter Verfahren wie Satellitenortung und "map matching" unter Einbeziehung von Landkartendaten bestimmt wird, können nun feststellen, ob sie in derselben Fahrtrichtung der Straße wie das anfragende Kraftfahrzeug unterwegs sind und entsprechend entscheiden, ob eine Antwort gesendet wird oder nicht. Obwohl Navigationssysteme inzwischen relativ weit verbreitet sind, weist doch der größte Teil des Kraftfahrzeugbestandes noch kein derartiges System auf und auch für die Zukunft ist nicht damit zu rechnen, dass alle Kraftfahrzeuge Navigationssysteme aufweisen werden.

Die US 2005/0137786 offenbart eine Vorrichtung für das übertragen von Information zwischen einem Fahrzeug und mindestens einem Sender, der getrennt von dem Fahrzeug angebracht ist. Die Vorrichtung umfasst eine Antenne, die auf dem Fahrzeug angebracht und zum Empfang von HF Wellen, die von den Sendern ausgestrahlt werden, geeignet ist. Desweiteren umfaßt die Vorrichtung ein Gerät zur Positionsbestimmung des Fahrzeugs, das so angebracht ist, daß die durch die Antenne empfangenen HF-Wellen analysiert werden können. Hierzu wird bei der Analyse ausgewertet ob durch die empfangenen Hf-Wellen Informationen übertragen werden, die von Bedeutung für den Betrieb des Fahrzeuges basierend auf der Fahrzeugposition sind und durch das Gerät zur Betimmung der Fahrzeugposition ermittelt wird. Es wird weitergehend die von Bedeutung erscheinende Information aus den als relevant erscheinden HF-Wellen extrahiert. Die von Bedeutung erscheinenden Informationen können die Position, Geschwindigkeit, Beschleunigung oder Informationen über die Straßenverhältnisse, das Wetter oder ähnliches darstellen.

Aufgabe der Erfindung ist es daher, ein Verfahren zum Aufbau eines drahtlosen kettenartigen ad-hoc Funknetzwerkes zwischen Kraftfahrzeugen anzugeben, das ohne Informationen eines Navigationssystems auskommt und dennoch eine richtungsbezogene Einbeziehung von Kraftfahrzeugen in das ad-hoc Funknetzwerk erlaubt.

Die Aufgabe wird gelöst durch ein ein Verfahren mit den Merkmalen des Anspruchs 1.

Bei einem Verfahren zum Aufbau eines drahtlosen kettenartigen ad-hoc Funknetzwerkes zwischen Kraftfahrzeugen wird in einem den Aufbau des ad-hoc Netzwerkes initialisierenden ersten Kraftfahrzeug eine Ausrichtung des ersten Kraftfahrzeuges zu einer Bezugsrichtung bestimmt. Die Ausrichtung des ersten Kraftfahrzeuges wird drahtlos an mindestens ein zweites Kraftfahrzeug übermittelt. In dem zweiten Kraftfahrzeug wird eine Ausrichtung des zweiten Kraftfahrzeuges zu der Bezugsrichtung ermittelt und eine relative Ausrichtung des zweiten Kraftfahrzeuges zu dem ersten Kraftfahrzeug bestimmt. Schließlich wird in dem zweiten Kraftfahrzeug eine Bewertung der relativen Ausrichtung des ersten zu dem zweiten Kraftfahrzeug durchgeführt und anhand eines Ergebnisses der Bewertung entschieden, ob das zweite Kraftfahrzeug Teilnehmer des ad-hoc Funknetzwerkes wird. Bei der Bewertung kann insbesondere die ermittelte relative Ausrichtung des ersten zu dem zweiten Kraftfahrzeug mit einem vorgegebenen Maximalwert verglichen werden. Ist die bestimmte relative Ausrichtung kleiner als dieser vorgegebene Maximalwert, so kann davon ausgegangen werden, dass das zweite Kraftfahrzeug die Straße in derselben Richtung befährt wie das erste Kraftfahrzeug und das zweite Kraftfahrzeug wird dann Teilnehmer des ad-hoc Funknetzwerkes und kann eine Antwort an das erste Kraftfahrzeug senden.

Das zweite Kraftfahrzeug leitet dann zusätzlich die Anfrage weiter und übermittelt dabei die Ausrichtung des anfragenden Kraftfahrzeugs. Kraftfahrzeuge, die die vom zweiten Kraftfahrzeug weitergeleitete Anfrage empfangen, können dann ebenfalls aufgrund eines Vergleichs ihrer eigenen Ausrichtung mit der Ausrichtung des ersten Kraftfahrzeugs entscheiden, ob sie die Straße in derselben Fahrtrichtung befahren, Teilnehmer des Netzwerkes werden und die Anfrage weiterleiten.

Dieses Verfahren ist in der Regel ausreichend, wenn die Straßenkrümmung relativ gering ist. Bei stark kurvigen Straßen, wie insbesondere Bergstraßen mit Serpentinen, kann die relative Ausrichtung zwischen dem anfragenden Kraftfahrzeug und einem weiter voraus fahrenden Kraftfahrzeug aufgrund einer Kurve groß sein und den vorgegebenen Maximalwert überschreiten. In diesem Fall bricht die Kette bereits frühzeitig ab, da aufgrund der sehr starken Differenz in der festgestellten Ausrichtung der Kraftfahrzeuge nicht davon ausgegangen wird, dass die Kraftfahrzeuge eine Straße in der gleichen Fahrtrichtung befahren.

In einer Weiterbildung des Verfahrens wird daher vorgeschlagen, dass vom zweiten Kraftfahrzeug die Ausrichtung des ersten Kraftfahrzeuges und des zweiten Kraftfahrzeuges drahtlos an mindestens ein drittes Kraftfahrzeug übermittelt wird, in dem dritten Kraftfahrzeug eine relative Ausrichtung des dritten Kraftfahrzeuges zu dem ersten und dem zweiten Kraftfahrzeug bestimmt wird, in dem dritten Kraftfahrzeug eine Bewertung der relativen Ausrichtung des ersten zu dem dritten Kraftfahrzeug sowie des zweiten zu dem dritten Kraftfahrzeug durchgeführt wird und anhand eines Ergebnisses der Bewertung entschieden wird, ob das dritte Kraftfahrzeug Teilnehmer des ad-hoc Funknetzwerkes wird. Das zweite Kraftfahrzeug übermittelt somit an das dritte Kraftfahrzeug neben der Ausrichtung des anfragenden ersten Kraftfahrzeuges auch seine eigene Ausrichtung. In dem dritten Kraftfahrzeug wird dann die relative Ausrichtung des ersten zu dem dritten Kraftfahrzeug sowie die relative Ausrichtung des zweiten zu dem dritten Kraftfahrzeug bewertet und anhand des Ergebnisses der Bewertung entschieden, ob das dritte Kraftfahrzeug Teilnehmer des ad-hoc Funknetzwerkes wird. Diese Vorgehensweise hat den Vorteil, dass sowohl die Ausrichtung eines benachbarten Kraftfahrzeuges als auch die Ausrichtung des das ad-hoc Funknetz initialisierenden Kraftfahrzeuges, das eine Anfrage ausgesendet hat, in die Bewertung mit einbezogen wird.

Insbesondere kann dann vom dritten Kraftfahrzeug die Ausrichtung des ersten Kraftfahrzeuges und die Ausrichtung des dritten Kraftfahrzeuges drahtlos an mindestens ein viertes Kraftfahrzeug übermittelt werden. In dem vierten Kraftfahrzeug kann dann eine relative Ausrichtung des vierten Kraftfahrzeuges zu dem ersten und dem dritten Kraftfahrzeug bestimmt werden und eine Bewertung der relativen Ausrichtung des ersten zu dem vierten Kraftfahrzeug sowie des dritten zu dem vierten Kraftfahrzeug durchgeführt werden. Anhand eines Ergebnisses der Bewertung wird dann entschieden, ob das vierte Kraftfahrzeug Teilnehmer des ad-hoc Funknetzwerkes wird. Allgemein wird also bei einer Weiterbildung der Kette sowohl die Ausrichtung des n-ten Kraftfahrzeuges als auch die Ausrichtung des ersten Kraftfahrzeuges an das (n+1)-te Kraftfahrzeug weitergeleitet und das (n+1)-te Kraftfahrzeug bewertet seine relative Ausrichtung in Bezug auf das n-te Kraftfahrzeug und das erste Kraftfahrzeug.

Beim Aufbau eines derartigen kettenartigen ad-hoc Funknetzwerkes kann die Ausrichtung der Kraftfahrzeuge in den einzelnen Kraftfahrzeugen jeweils auf verschiedene Weise bestimmt werden, wobei insbesondere jedoch auch solche Kraftfahrzeuge eingeschlossen werden, bei denen die Ausrichtung mittels eines elektronischen Kompasses bestimmt wird. Die Bezugsrichtung ist dann vorzugsweise eine Himmelsrichtung, insbesondere Norden.

Die Erfindung wird nachfolgend anhand eines Ausführungsbeispiels und der Zeichnung näher beschrieben. Es zeigen:
- Fig. 1:: die wesentlichen Komponenten eines erfindungsgemä- ßen Kommunikationssystems,
- Fig. 2:: eine Straßensituation mit mehreren Kraftfahrzeugen.

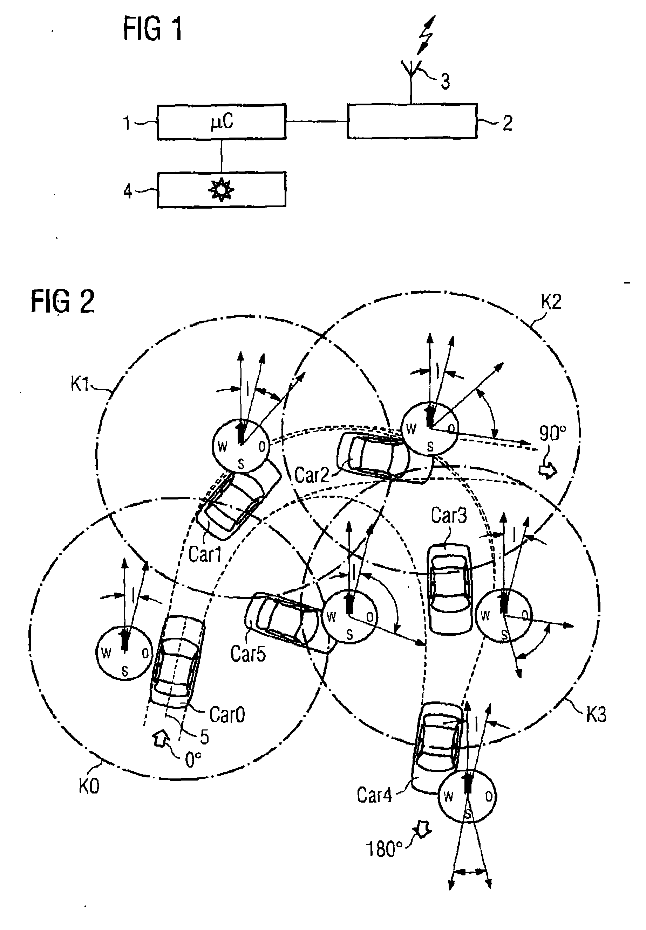

Fig. 1 zeigt eine erfindungsgemäße Ausgestaltung eines Kommunikationssystems, das zur Teilnahme an einem kettenartigen ad-hoc Funknetzwerk zwischen Kraftfahrzeugen ausgelegt ist. Das Kommunikationssystem weist eine Steuereinheit 1 auf. Mit der Steuereinheit 1 ist eine Sende- /Empfangseinheit 2 verbunden, die Funksignale über eine Antenne 3 empfängt und aussendet. Mit der Steuereinheit, ist weiterhin ein elektronischer Kompass 4 verbunden, der eine Information hinsichtlich der Ausrichtung des Kraftfahrzeuges bezüglich Norden an die Steuereinheit 1 leitet. Die Ausrichtung bezieht sich dabei auf eine Längsrichtung des Kraftfahrzeuges, die sich vom hinteren zum vorderen Ende des Kraftfahrzeuges erstreckt und ggf. auch als Vektor dargestellt sein kann. Die Steuereinheit 1 ist ausgelegt zur Bewertung der Ausrichtung des Kraftfahrzeuges bezüglich einer über die Sende-/Empfangseinheit 2 empfangenen Ausrichtung mindestens eines weiteren Kraftfahrzeuges. Die Bewertung erfolgt dabei in der Steuereinheit 1 anhand eines entsprechenden Computerprogramms.

Fig. 2 zeigt eine Straßensituation mit mehreren Kraftfahrzeugen car0 bis car5, anhand derer der Aufbau des ad-hoc Netzwerkes erläutert wird. Alle Kraftfahrzeuge weisen ein Kommunikationssystem für die Kommunikation von Kraftfahrzeug zu Kraftfahrzeug auf. Die Reichweite der Kommunikationssysteme der einzelnen Kraftfahrzeuge ist begrenzt und wird durch die Kreise K0 bis K4 verdeutlicht, wobei der Kreis K0 die Begrenzung der Reichweite des Kommunikationssystems des Kraftfahrzeuges car0, der Kreis K1 die Begrenzung der Reichweite des Kommunikationssystems des Kraftfahrzeuges car1 u.s.w. angibt.

Das Kraftfahrzeug car0 sendet über sein Kommunikationssystem eine Anfrage aus wie z. B. "Wie ist die Verkehrslage (Geschwindigkeit, Wetterlage, Tankstelle u. ä.) in meiner Fahrtrichtung". Zusätzlich sendet das Kraftfahrzeug car0 seine eigene Ausrichtung mit, die mittels des elektronischen Kompasses 4 ermittelt wurde. Die Ausrichtung des Kraftfahrzeugs ist hierbei die Ausrichtung der Längsachse 5 des Kraftfahrzeugs bezogen auf die Vorzugsrichtung Norden (N). Der Winkel I zwischen der Nordrichtung und der Längsachse 5 beträgt im Beispiel 20°.

Die Kommunikationssysteme der Kraftfahrzeuge car1 und car5 empfangen die Anfrage des Kraftfahrzeuges car0. Die Kraftfahrzeuge car1 und car5 bestimmen daraufhin ihre eigene Ausrichtung und vergleichen diese mit der Ausrichtung des Kraftfahrzeuges car0, die mit der Anfrage übermittelt wurde.

Bei der Bewertung der relativen Ausrichtung des Kraftfahrzeuges car5 zu dem Kraftfahrzeug car0, die von dem Kraftfahrzeug car0 mit übermittelt wurde, wird von dem Kommunikationssystem des Kraftfahrzeuges car5 festgestellt, dass es anhand der vorgegebenen Bewertungskriterien nicht die Straße in derselben Fahrtrichtung befährt wie das Kraftfahrzeug car0. Das Kraftfahrzeug car5 koppelt sich daher nicht in das Netzwerk ein und sendet die Anfrage nicht weiter.

Bei der Bewertung der relativen Ausrichtung des Kraftfahrzeuges car1 bezüglich des Kraftfahrzeuges car0 wird von dem Kommunikationssystem des Kraftfahrzeuges car1 anhand der vorgegebenen Bewertungskriterien festgestellt, dass das Kraftfahrzeug car1 die Straße in derselben Fahrtrichtung befährt wie das Kraftfahrzeug car0. Das Kraftfahrzeug car1 wird daher Teilnehmer des ad-hoc Netzwerkes und sendet über sein Kommunikationssystem die Anfrage des Kraftfahrzeuges car0 weiter. Hierbei überträgt das Kommunikationssystem des Kraftfahrzeuges car1 sowohl die Ausrichtung des Kraftfahrzeuges car0 als auch seine eigene Ausrichtung.

Die Anfrage des Kraftfahrzeuges car1 wird von dem Kraftfahrzeug car2 empfangen. Von dem Kommunikationssystem des Kraftfahrzeuges car2 wird die Ausrichtung des Kraftfahrzeuges car2 bestimmt und mit den empfangenen Ausrichtungen der Kraftfahrzeuge car0 und car1 verglichen und anhand der vorgegebenen Bewertungskriterien festgestellt, dass das Kraftfahrzeug car2 die Straße ebenfalls in derselben Fahrtrichtung wie die Kraftfahrzeuge car1 und car0 befährt.

Das Kraftfahrzeug car2 sendet daher nun die Anfrage des Kraftfahrzeuges car0 weiter, wobei neben der eigentlichen Anfrage die Ausrichtung des Kraftfahrzeuges car0 und die Ausrichtung des Kraftfahrzeuges car2 in der Anfrage mit übermittelt wird.

Das Kraftfahrzeug car3 empfängt die Anfrage des Kraftfahrzeuges car2 und bestimmt seine eigene Ausrichtung. Das Kommunikationssystem des Kraftfahrzeuges car3 bewertet dann die Ausrichtung des Kraftfahrzeuges car3 bezüglich der Ausrichtung des Kraftfahrzeuges car0 sowie die Ausrichtung des Kraftfahrzeuges car3 bezüglich des anfragenden Kraftfahrzeuges car2. Anhand der vorgegebenen Bewertungskriterien wird dann auch von dem Kommunikationssystem des Kraftfahrzeuges car3 entschieden, ob dieses Teilnehmer des ad-hoc Funknetzwerkes wird. Falls letzteres der Fall ist, leitet auch das Kommunikationssystem des Kraftfahrzeuges car3 die Anfrage, wie zuvor beschrieben, weiter, wobei die eigene Ausrichtung des Kraftfahrzeuges car3 sowie die Ausrichtung des Kraftfahrzeuges car0 mit übermittelt wird. Das Kraftfahrzeug car4 empfängt dann die Anfrage des Kraftfahrzeuges car3 und bewertet ebenfalls anhand der vorgegebenen Kriterien, ob es Teilnehmer des ad-hoc Funknetzwerkes wird.

In dieser Weise wird die Anfrage so lange fortgesetzt, bis kein neues Kraftfahrzeug mehr Teilnehmer des ad-hoc Funknetzwerkes wird. Es entsteht somit eine kettenartige Netzwerkverbindung, wobei die ursprüngliche Anfrage des Kraftfahrzeuges car0 von allen Teilnehmern des ad-hoc Funknetzwerkes beantwortet werden kann, wobei beispielsweise eine Antwort des Kraftfahrzeugs car3 über das Kraftfahrzeug car2 und das Kraftfahrzeug car1 an das Kraftfahrzeug car0 weitergeleitet wird.

Nachfolgend wird das Verfahren anhand beispielhafter Bewertungskriterien und der Tabelle erläutert. Die Bewertung beinhaltet zwei Abbruchkriterien. Zum einen wird die relative Ausrichtung des die Anfrage empfangenen Kraftfahrzeuges, beispielsweise car3, zu dem in der Kette vorausfolgenden, also die Anfrage sendenden Kraftfahrzeug, hier car2, mit einem ersten Grenzwert verglichen, der beispielsweise 60° beträgt. Stellt ein Kommunikationssystem eines Kraftfahrzeugs dagegen fest, dass die relative Ausrichtung des Kraftfahrzeugs zu dem vorhergehenden Kraftfahrzeug der Kette mehr als 60° beträgt, so wird sich dieses Kraftfahrzeug nicht in die Kette eingliedern. Ein Überschreiten dieses ersten Grenzwertes stellt somit die erste Abbruchbedingung dar.

Als ein zweiter Grenzwert kann die Gesamtabweichung der Ausrichtung des aktuellen Kraftfahrzeuges (z.B. car3), das die Anfrage empfängt, zur Ausrichtung des die Anfrage initialisierenden Kraftfahrzeuges, hier car0, festgelegt werden. Dieser zweite Grenzwert kann beispielsweise 150° betragen. Ein Überschreiten dieses zweiten Grenzwertes könnte dann eine weitere Abbruchbedingung sein.

Eine weitere Verfeinerung kann dadurch erreicht werden, dass die Kette nicht sofort abgebrochen wird, wenn dieser zweite Grenzwert einmalig überschritten wird, sondern beispielsweise erst, wenn dieser zweite Grenzwert von einem zweiten Kraftfahrzeug oder dritten Kraftfahrzeug der Kette überschritten wird. Um dies festzustellen kann ein Zähler eingeführt werden, dessen Wert bei jedem Überschreiten des zweiten Grenzwertes um 1 erhöht wird, wobei der aktuelle Wert des Zählers mit der Anfrage ebenfalls übermittelt wird. Diese Verfeinerung ist insbesondere bei kurvigem Straßenverlauf vorteilhaft.

In der nachfolgend beschriebenen Ausgestaltung wird ein solcher Zähler BDHC (BackDirectionHopCount) eingeführt, wobei als zweites Abbruchkriterium BDHC ≥ 2 eingeführt wird.

In der Tabelle sind somit in der ersten Spalte die Kraftfahrzeuge und Paketnummern der von diesen Kraftfahrzeugen empfangenen Anfragepakete aufgelistet. In der zweiten Spalte ist die Ausrichtung I des Kraftfahrzeugs car0, das die Anfrage initialisiert, notiert. In der dritten Spalte ist die Ausrichtung AR(n) jedes der Kraftfahrzeuge car0 bis car5 angegeben. Diese beiden Werte, I und AR(n), sind Bestandteil jedes Anfragepakets.

In der vierten Spalte ist die von jedem Kraftfahrzeug car1 bis car5 berechnete relative Ausrichtung deltaAR zum jeweiligen vorausgehenden Kraftfahrzeug der Kette aufgelistet.

In der fünften Spalte ist die von jedem Kraftfahrzeug car1 bis car5 berechnete relative Ausrichtung (AR(n)-I)zum ersten Kraftfahrzeug car0 aufgelistet.

In der sechsten Spalte ist für jedes der Kraftfahrzeuge ein Parameter BD (BackDirection) aufgelistet, der die Werte F (falsch, unwahr) oder W (wahr) annehmen kann. BD nimmt den Wert W an, wenn das zugehörige Kraftfahrzeug eine relative Ausrichtung zu car0 oberhalb des zweiten Grenzwertes aufweist. Ansonsten nimmt BD den Wert F an.

In der siebenten Spalte ist der Wert des Zählers BDHC angegeben, der immer dann um eins erhöht wird, wenn BD den Wert W annimmt. Der aktuelle BDHC wird mit der Anfrage übermittelt.

**Tabelle**

| carNr/ PaketNr | I | AR(n) | deltaAR | AR(n)-I | BD | BDHC |
|---|---|---|---|---|---|---|
| Car0/0 | 20° | 20° | | | | 0 |
| Car1/1 | 20° | 60° | 40° | 40° | F | 0 |
| Car2/2 | 20° | 115° | 55° | 95° | F | 0 |
| Car3/3 | 20° | 173° | 58° | 153° | W | 1 |
| Car4/4 | 20° | 193° | 20° | 173° | W | 2 (Abbruch) |
| | | | | | | |
| Car5/1 | 20° | 90° | 70° (Abbruch) | 70° | F | 0 |

Bei dem in Fig. 2 dargestellten Beispiel beträgt die Ausrichtung des Kraftfahrzeuges car0 gegen Norden 20°. Die Ausrichtung des die Anfrage des Kraftfahrzeuges car0 empfangenen Kraftfahrzeuges car5 gegen Norden beträgt 90°. Die relative Ausrichtung des Kraftfahrzeuges car5 zum Kraftfahrzeug car0 beträgt somit 70°, sodass das erste Abbruchkriterium erfüllt ist. Das Kraftfahrzeug car5 wird aufgrund des ersten Abbruchkriteriums nicht Teilnehmer der Kette.

Das Kraftfahrzeug car1 weist eine Ausrichtung von 60° gegenüber Norden auf. Die relative Ausrichtung zum Kraftfahrzeug car0 beträgt 40° und liegt sowohl.unterhalb des Grenzwertes des ersten Abbruchkriteriums als auch unterhalb des zweiten Grenzwertes, der 150° beträgt. Der Parameter BD wird somit auf den Wert F (falsch) gesetzt und der Zähler BDHC bleibt bei 0.

Das Kraftfahrzeug car2 weist eine Ausrichtung von 115° gegenüber Norden auf. Die relative Ausrichtung zum vorhergehenden Kraftfahrzeug car1 beträgt 55° und liegt somit unterhalb des ersten Grenzwertes. Die relative Ausrichtung des Kraftfahrzeuges car2 zu car0 beträgt 95° und liegt somit ebenfalls unterhalb des zweiten Grenzwertes, so dass BD = F gesetzt wird und BDHC bei 0 bleibt. Das Kraftfahrzeug car2 wird somit ebenfalls Teilnehmer des Funknetzes.
Das Kraftfahrzeug car3 weist eine Ausrichtung von 173° gegen Norden auf. Die relative Ausrichtung zum Kraftfahrzeug car2 beträgt 58° und liegt somit unterhalb des ersten Grenzwertes. Die relative Ausrichtung des Kraftfahrzeuges car3 zum Kraftfahrzeug car0 beträgt 153°, ist somit größer als 150° und liegt oberhalb des zweiten Grenzwertes, so dass nunmehr BD gleich W (wahr) gesetzt wird und der Zähler BDHC von 0 auf 1 erhöht wird. Das Abbruchkriterium BDHC ≥ 2 wird durch das Kraftfahrzeug car3 jedoch ebenfalls noch nicht erreicht, so dass auch dieses Kraftfahrzeug Bestandteil des Netzwerkes wird.

Das Kraftfahrzeug car4 weist eine Ausrichtung gegen Norden von 193° auf. Die relative Ausrichtung gegenüber dem Kraftfahrzeug car3 beträgt 20°, so dass das erste Abbruchkriterium nicht erfüllt ist. Die relative Ausrichtung des Kraftfahrzeugs car4 zum Kraftfahrzeug car0 beträgt 173° und liegt somit jedoch ebenfalls oberhalb des zweiten Grenzwertes, so dass wiederum BD = W gesetzt wird, BDHC um 1 erhöht wird und nunmehr also den Wert 2 erreicht. Ein Wert BDHC = 2 ist nach den Vorgaben eine Abbruchbedingung, so dass das Kraftfahrzeug car4 nicht Teilnehmer des Funknetzes wird und die Anfrage auch nicht weiterleitet. Die Kette ist somit an dieser Stelle unterbrechen.

Bei dem beschriebenen Verfahren sendet somit jedes Kraftfahrzeug über sein Kommunikationssystem sowohl die Ausrichtung I des die Anfrage initialisierenden Kraftfahrzeuges car0 als auch seine eigene Ausrichtung AR und den Zähler BDHC zusammen mit der Anfrage weiter. Jedes Kraftfahrzeug, das diese Anfrage empfängt, vergleicht, ob seine eigene relative Ausrichtung gegenüber dem vorhergehenden anfragenden Kraftfahrzeug kleiner als der erste Grenzwert ist. Ein Überschreiten des ersten Grenzwertes ist eine erste Abbruchbedingung.

Weiterhin wird verglichen, ob die relative Ausrichtung dieses aktuellen Kraftfahrzeuges zu dem die Anfrage initialisierenden Kraftfahrzeug größer als ein zweiter Grenzwert ist und wenn dies der Fall ist, wird ein Zähler um 1 erhöht, wobei ein Erreichen eines Grenzwertes für diesen Zähler eine Abbruchbedingung ist, d.h. das entsprechende Kraftfahrzeug sendet die Anfrage nicht weiter.

Die genannten Abbruchbedingungen sind nur beispielhaft aufgeführt und können durch andere Abbruchbedingungen ersetzt werden.

## Patentansprüche

1. Verfahren zum Aufbau eines drahtlosen kettenartigen ad-hoc Funknetzwerkes zwischen Kraftfahrzeugen (car0-car5) mit Kommunikationssystemen für die Kommunikation von Kraftfahrzeug zu Kraftfahrzeug, wobei in einem den Aufbau des ad-hoc Funknetzwerks initialisierenden ersten Kraftfahrzeug (car0) eine Ausrichtung (I) des ersten Kraftfahrzeugs (car0) zu einer Bezugsrichtung (N) bestimmt wird,
die Ausrichtung (I) des ersten Kraftfahrzeugs durch ein Kommunikationssystem für die Kommunikation von Kraftfahrzeug zu Kraftfahrzeug des ersten Kraftfahrzeugs (car0) drahtlos an ein Kommunikationssystem für die Kommunikation von Kraftfahrzeug zu Kraftfahrzeug eines zweiten Kraftfahrzeugs (car1) übermittelt wird,
wobei in dem zweiten Kraftfahrzeug (car1) eine Ausrichtung des zweiten Kraftfahrzeugs (car1) zu der Bezugsrichtung (N) ermittelt wird,
in dem zweiten Kraftfahrzeug (car1) unter Verwendung der Ausrichtung zur Bezugsrichtung (N) des ersten und des zweiten Kraftfahrzeugs (car0, car1) eine relative Ausrichtung des zweiten Kraftfahrzeugs (car1) zu dem ersten Kraftfahrzeug (car0) bestimmt wird, in dem zweiten Kraftfahrzeug (car1) eine Bewertung der relativen Ausrichtung des ersten zu dem zweiten Kraftfahrzeug (car0, car1) durchgeführt wird und anhand eines Ergebnisses der Bewertung entschieden wird, ob das zweite Kraftfahrzeug (car1) mittels des Kommunikationssystems für die Kommunikation von Kraftfahrzeug zu Kraftfahrzeug Teilnehmer des ad-hoc Funknetzwerks wird
und wobei vom zweiten Kraftfahrzeug (car1) die Ausrichtung zur Bezugsrichtung (N) des ersten Kraftfahrzeugs (car0) und des zweiten Kraftfahrzeugs (car1) drahtlos mittels des Kommunikationssystems für die Kommunikation von Kraftfahrzeug zu Kraftfahrzeug an ein Kommunikationssystem für die Kommunikation von Kraftfahrzeug zu Kraftfahrzeug mindestens eines dritten Kraftfahrzeugs (car2) übermittelt wird, in dem dritten Kraftfahrzeug (car2) eine Ausrichtung des dritten Kraftfahrzeugs (car2) zu der Bezugsrichtung (N) ermittelt wird, in dem dritten Kraftfahrzeug unter Verwendung der Ausrichtung zur Bezugsrichtung (N) des ersten bis dritten Fahrzeugs (car0-car2) eine relative Ausrichtung des dritten Kraftfahrzeugs (car2) zu dem ersten und dem zweiten Kraftfahrzeug (car0, car1) bestimmt wird, in dem dritten Kraftfahrzeug (car2) eine Bewertung der relativen Ausrichtung des ersten zu dem dritten Kraftfahrzeug - (car0, car2) sowie des zweiten zu dem dritten Kraftfahrzeug (car1, car2) durchgeführt wird und anhand eines Ergebnisses der Bewertung entschieden Wird, ob das dritte Kraftfahrzeug (car2) mittels des Kommunikationssystems für die Kommunikation von Kraftfahrzeug zu Kraftfahrzeug Teilnehmer des ad-hoc Funknetzwerks wird.

2. Verfahren nach Anspruch 1,
**dadurch gekennzeichnet, dass** vom dritten Kraftfahrzeug (car2) die Ausrichtung zur Bezugsrichtung (N) des ersten und des dritten Kraftfahrzeugs (car0, car2) drahtlos mittels des Kommunikationssystems für die Kommunikation von Kraftfahrzeug zu Kraftfahrzeug an ein Kommunikationssystem für die Kommunikation von Kraftfahrzeug zu Kraftfahrzeug mindestens eines vierten Kraftfahrzeugs (car3) übermittelt wird,
in dem vierten Kraftfahrzeug (car3) eine Ausrichtung des vierten Kraftfahrzeugs (car3) zu der Bezugsrichtung (N) ermittelt wird,
in dem vierten Kraftfahrzeug (car3) unter Verwendung der Ausrichtung zur Bezugsrichtung (N) des ersten, dritten und vierten Fahrzeugs (car0, car2, car3) eine relative Ausrichtung des vierten Kraftfahrzeugs (car3) zu dem ersten und dem dritten Kraftfahrzeug bestimmt wird, in dem vierten Kraftfahrzeug (car3) eine Bewertung der relativen Ausrichtung des ersten zu dem vierten Kraftfahrzeug (car0, car3) sowie des dritten zu dem vierten Kraftfahrzeugs (car2, car3) durchgeführt wird und anhand eines Ergebnisses der Bewertung entschieden wird, ob das vierte Kraftfahrzeug (car3) mittels des Kommunikationssystems für die Kommunikation von Kraftfahrzeug zu Kraftfahrzeug Teilnehmer des ad-hoc Funknetzwerks wird.

3. Verfahren nach einem der vorhergehenden Ansprüche, **dadurch gekennzeichnet, dass** die Ausrichtung zur Bezugsrichtung (N) mindestens eines der Kraftfahrzeuge (car0 bis car5) mittels eines elektronischen Kompasses (4) bestimmt wird.

4. Verfahren nach einem der vorhergehenden Ansprüche, **dadurch gekennzeichnet, dass** die Bezugsrichtung eine Himmelsrichtung, insbesondere Norden (N), ist.

## Claims

1. Method for setting up a wireless chain-type ad-hoc radio network between motor vehicles (car0-car5) with communication systems for the communication from motor vehicle to motor vehicle, wherein an orientation (I) of the first motor vehicle (car0) with respect to a reference direction (N) is determined in a first motor vehicle (car0) initializing the setting-up of the ad-hoc radio network,
the orientation (I) of the first motor vehicle is communicated wirelessly by a communication system for the communication from motor vehicle to motor vehicle of the first motor vehicle (car0) to a communication system for the communication from motor vehicle to motor vehicle of a second motor vehicle (car1),
wherein in the second motor vehicle (car1), an orientation of the second motor vehicle (car1) with respect to the reference direction (N) is determined,
in the second motor vehicle (car1) with the use of the orientation with respect to the reference direction (N) of the first and the second motor vehicle (car0, car1), a relative orientation of the second motor vehicle (car1) with respect to the first motor vehicle (car0) is determined, in the second motor vehicle (car1), an evaluation of the relative orientation of the first motor vehicle with respect to the second one (car0, car1) is carried out and on the basis of a result of the evaluation, a decision is made whether the second motor vehicle (car1) becomes a participant in the ad-hoc radio network by means of the communication system for the communication from motor vehicle to motor vehicle,
and wherein the second motor vehicle (car1) wirelessly communicates by means of the communication system for the communication from motor vehicle to motor vehicle to a communication system for the communication from motor vehicle to motor vehicle of at least one third motor vehicle (car2), the orientation with respect to the reference direction (N) of the first motor vehicle (car0) and of the second motor vehicle (car1), in the third motor vehicle (car2) an orientation of the third motor vehicle (car2) with respect to the reference direction (N) is determined, in the third motor vehicle with the use of the orientation with respect to the reference direction (N) of the first to the third vehicle (car0-car2), a relative orientation of the third motor vehicle (car2) with respect to the first motor vehicle and the second motor vehicle (car0, car1) is determined, in the third motor vehicle (car2) an evaluation of the relative orientation of the first motor vehicle with respect to the third one (car0, car2) and of the second motor vehicle with respect to the third one (car1, car2) is carried out and on the basis of a result of the evaluation, a decision is made whether the third motor vehicle (car2) becomes a participant in the ad-hoc radio network by means of the communication system for the communication from motor vehicle to motor vehicle.

2. Method according to Claim 1, **characterized in that** the third motor vehicle (car2) wirelessly communicates by means of the communication system for the communication from motor vehicle to motor vehicle to a communication system for the communication from motor vehicle to motor vehicle of at least one fourth motor vehicle (car3), the orientation with respect to the reference direction (N) of the first and the third motor vehicle (car0, car2),
in the fourth motor vehicle (car3) an orientation of the fourth motor vehicle (car3) with respect to the reference direction (N) is determined,
in the fourth motor vehicle (car3) with the use of the orientation with respect to the reference direction (N) of the first, third and fourth vehicle (car0, car2, car3), a relative orientation of the fourth motor vehicle (car3) with respect to the first motor vehicle and the third one is determined,
in the fourth motor vehicle (car3), an evaluation of the relative orientation of the first motor vehicle to the fourth one (car0, car3) and of the third motor vehicle with respect to the fourth motor vehicle (car2, car3) is carried out and on the basis of a result of the evaluation, a decision is made whether the fourth motor vehicle (car3) becomes a participant in the ad-hoc radio network by means of the communication system for the communication from motor vehicle to motor vehicle.

3. Method according to one of the preceding claims, **characterized in that** the orientation with respect to the reference direction (N) of at least one of the motor vehicles (car0 to car5) is determined by means of an electronic compass (4).

4. Method according to one of the preceding claims, **characterized in that** the reference direction is a compass point, particularly North (N)

## Revendications

1. Procédé permettant d'établir un réseau radio ad hoc sans fil et du type en chaîne entre des véhicules automobiles (car0-car5) disposant de systèmes de communication permettant de communiquer de véhicule à véhicule, où, dans un premier véhicule automobile (car0) qui initialise l'établissement du réseau radio ad hoc, l'orientation (I) du premier véhicule automobile (car0) est déterminée par rapport à une direction de référence (N),
où l'orientation (I) du premier véhicule automobile est transmise sans fil par un système de communication permettant de communiquer de véhicule à véhicule du premier véhicule automobile (car0) à un système de communication permettant de communiquer de véhicule à véhicule d'un deuxième véhicule automobile (car1),
où, dans le deuxième véhicule automobile (car1), l'orientation du deuxième véhicule automobile (car1) est déterminée par rapport à la direction de référence (N), où, dans le deuxième véhicule automobile (car1), l'orientation relative du deuxième véhicule automobile (car1) par rapport au premier véhicule automobile (car0) est déterminée en utilisant l'orientation par rapport à la direction de référence (N) du premier et du deuxième véhicule automobile (car0, car1), où, dans le deuxième véhicule automobile (car1), il est procédé à une évaluation de l'orientation relative du premier véhicule automobile par rapport au deuxième véhicule automobile (car0, car1) et, à l'aide du résultat de l'évaluation, il est décidé si le deuxième véhicule automobile (car1) prend part au réseau radio ad hoc au moyen du système de communication permettant de communiquer de véhicule à véhicule
et où le deuxième véhicule automobile (car1) transmet, sans fil et au moyen du système de communication permettant de communiquer de véhicule à véhicule, l'orientation par rapport à la direction de référence (N) du premier véhicule automobile (car0) et du deuxième véhicule automobile (car1) à un système de communication permettant de communiquer de véhicule à véhicule de au moins un troisième véhicule automobile (car2), où, dans le troisième véhicule automobile (car2), l'orientation du troisième véhicule automobile (car2) est déterminée par rapport à la direction de référence (N), où, dans le troisième véhicule automobile (car2), l'orientation relative du troisième véhicule automobile (car2) est déterminée par rapport au premier et au deuxième véhicule automobile (car0, car1) en utilisant l'orientation par rapport à la direction de référence (N) du premier et du deuxième véhicule automobile (car0, car1), où, dans le troisième véhicule automobile (car2), il est procédé à une évaluation de l'orientation relative du premier véhicule automobile par rapport au troisième véhicule automobile (car0, car2), ainsi que du deuxième véhicule automobile par rapport au troisième véhicule automobile (car1, car2) et, à l'aide du résultat de l'évaluation, il est décidé si le troisième véhicule automobile (car2) prend part au réseau radio ad hoc au moyen du système de communication permettant de communiquer de véhicule à véhicule.

2. Procédé selon la revendication 1,
**caractérisé par le fait que** le troisième véhicule automobile (car2) transmet, sans fil et au moyen du système de communication permettant de communiquer de véhicule à véhicule, l'orientation par rapport à la direction de référence (N) du premier et du troisième véhicule automobile (car0, car2) à un système de communication permettant de communiquer de véhicule à véhicule de au moins un quatrième véhicule automobile (car3),
que, dans le quatrième véhicule automobile (car3), l'orientation du quatrième véhicule automobile (car3) est déterminée par rapport à la direction de référence (N),
que, dans le quatrième véhicule automobile (car3), en utilisant l'orientation par rapport à la direction de référence (N) du premier, du troisième et du quatrième véhicule automobile (car0, car2, car3), l'orientation relative du quatrième véhicule automobile (car3) par rapport au premier et au troisième véhicule automobile est déterminée,
que, dans le quatrième véhicule automobile (car3), il est procédé à une évaluation de l'orientation relative du premier véhicule automobile par rapport au quatrième véhicule automobile (car0, car3), ainsi que du troisième véhicule automobile par rapport au quatrième véhicule automobile (car2, car3) et, à l'aide du résultat de l'évaluation, il est décidé si le quatrième véhicule automobile (car3) participe au réseau radio ad hoc au moyen du système de communication permettant de communiquer de véhicule à véhicule.

3. Procédé selon l'une des revendications précédentes,
**caractérisé par le fait que** l'orientation par rapport à la direction de référence (N) d'au moins l'un des véhicules automobiles (car0 à car5) est déterminée à l'aide d'une boussole électronique (4).

4. Procédé selon l'une des revendications précédentes,
**caractérisé par le fait que** la direction de référence est l'un des points cardinaux, notamment le Nord (N).
